# EUROPEAN PATENT SPECIFICATION

(11) **EP 3 353 832 B1**
(45) Date of publication and mention of the grant of the patent: **23.06.2021**
(21) Application number: 17825914.9
(22) Date of filing: 15.12.2017
(51) Int. Cl.: H01M 2/10, H01M 2/30, H01M 10/48, H01M 10/6235, B25F 5/00

(54) **POWER TOOL SYSTEM INCORPORATING BATTERY PACK FOR USE TO SUPPLY POWER AT DIFFERENT VOLTAGES TO DIFFERENT TOOLS**
ELEKTROWERKZEUGSYSTEM MIT BATTERIEPACK ZUR VERWENDUNG ZUR STROMVERSORGUNG MIT VERSCHIEDENEN SPANNUNGEN AN VERSCHIEDENE WERKZEUGE
SYSTÈME D'OUTILS ÉLECTRIQUES INCORPORANT UN BLOC-BATTERIE DESTINÉ À ÊTRE UTILISÉ POUR FOURNIR DE L'ÉNERGIE À DIFFÉRENTES TENSIONS À DIFFÉRENTS OUTILS

(30) Priority: 15.12.2016 GB 201621312
(43) Date of publication of application: 01.08.2018
(73) Proprietor: 7RDD Limited, York, Yorkshire YO19 5SE (GB)
(72) Inventor: ENSING, Geert, Clifton York Yorkshire YO30 6FE (GB); BAKKER, Rients, Shanghai 200030 (CN)
(74) Representative: Wood, Graham
(86) International application number: PCT/GB2017/053759
(87) International publication number: WO 2018/109488

(56) References cited:
- EP-A1- 2 562 895
- WO-A1-2015/132606
- US-A1- 2014 159 642

## Description

The invention to which the application relates is a power tool system which includes a common portable power supply, typically of a form referred to as a battery pack, and which can be detachably attached to power tools to allow the power tool to be rendered operable when the battery pack is at least partially charged so as to provide power at one of at least two different Voltage levels.

The provision of a battery pack which can be attached to a power tool to allow power to be supplied at a particular Voltage level to operate the tool is well known and to the extent that conventionally, for tools such as drills, reciprocating saws and the like two versions of particular models will typically be available for purchase, a first version with a mains power supply connection and a second version in which the power is supplied from the connected battery pack and which therefore allows the tool to be used at locations where a mains power supply is not readily connectable.

The battery pack typically comprises a plurality of cells which are interconnected so as to provide power therefrom. The cells are provided within, typically, a sealed housing, and the housing is provided with location means and electrical connections to allow the battery pack to be located and electrically connected with the power tool to provide power thereto and the same or further location means and electrical connections allow the battery pack to be electrically connected to a charger device to allow the recharging of the batteries in the battery pack with the charger connected to a mains power supply.

For the battery pack to be usable, the same needs to be periodically charged and the frequency at which the charge needs to be made can be dependent upon a number of factors, alone, or in combination, and which can include, the level and load of the usage of the power tool, the capacity of the battery pack, the age of the battery pack and/or the form of the cells provided therein. The type, speed and power of power tools which can be operated in conjunction with a battery pack can also be limited by the above factors. It is therefore found that while the use of battery packs has undoubted advantages in allowing the greater flexibility of usage of the power tool, the user of the power tool can become frustrated over the lack of power of the power tool when operated and/or the lack of time between the need to recharge the battery pack.

In addition to the above, the conventional battery packs provided for use with power tools are typically configured to provide a power supply at a specific Voltage, most typically 18 Volts. The means of connection between the power tools and/or battery pack can typically be selected to suit specific power tool and /or charger requirements and it is commonly the case that a battery pack is provided for use with a number of tools of a particular Voltage which are made by one manufacturer but cannot be used on power tools which are made by another manufacturer. However, in each case typically the connections will include an 18V and 0V connecting terminal, each of which is provided in the form of a female socket provided in one of the battery pack or power tool and a male plug provided in the other of the battery pack or power tool. In addition to the cells, the battery pack may include power supply control means which allow the controlled charging of the cells and the discharge of power from the same to the power tool.

However a problem with the conventional battery pack is that they are currently designed to supply a fixed Voltage whilst, increasingly, there is a need for certain types of power tools to be provided with a power supply of a greater Voltage so as to provide higher power wattage values to as to allow the power tool to operate properly, such as relatively heavy duty power tools such as chainsaws.

Attempts to provide battery packs which provide a higher, fixed Voltage, have, to date, resulted in relatively large and bulky packs being provided due to the relatively large number of cells required to be accommodated therein in order to provide the higher Voltage, and which therefore adds significant weight to the power tool. Another option has been to use two lower fixed Voltage battery packs in combination which provides the additional weight problem and also raises problems in terms of accommodating the two packs on the body of the power tool as well as the need to charge two battery packs simultaneously.

It is also known from the patent application US2016204475 to provide a system whereby a battery pack can be adapted to provide two different Voltages therefrom, with the adaptation typically being as a result of a mechanical intervention when one of two different power tools are connected to the battery pack so that one of the power tools allows the battery pack to operate in a default format at which a first Voltage level passes from the battery pack to the power tool and the other of the power tools mechanically adapts the battery pack when connected thereto so that the battery pack operates electrically in a different form at which a different Voltage level passes from the battery pack to the power tool and which Voltage is more suitable for that power tool than the Voltage provided when the battery pack is in the default form. Another known system allows a switch mechanism to be provided on the battery pack which allows the battery pack to be switched between operating at two different Voltage levels. The disadvantage of this system is that the battery pack is required to be provided with relatively complex mechanical and electrical connection systems and that in order for power tools which are connected thereto to be provided with the appropriate Voltage, firstly, the relatively complex and expensive battery pack has to be purchased and, secondly has to operate correctly so as to operate safely, i.e. the mechanical adaptation has to be performed correctly on each time of use and which can be problematic especially when one considers that the power tools are often used in environments in which there is considerable dust, wood chips and /or in external environments in which debris, soil, mud and the like may be present , all of which can clog up and/or damage and hence potentially prevent, the mechanical adaptation occurring and hence prevent the change in Voltage configuration of the battery pack being achievable.

The applicant, in their co-pending application, discloses a battery pack and power tool assembly in which the required one Voltage supplies is selected by the mechanical and electrical connection of the power tool and the battery pack at an instant of time.

It should be noted that the reference to power tools herein refers to any item which is rendered capable of being operated when a power supply is provided thereto by connection with at least one battery pack. The item can be any of, hand held items such as drills, chainsaws or the like, items which are controllable by a user, such as a powered vehicle, and generally any item which, when provided with the power supply from the battery pack to operate, can be used as an assistance to the user in performing a desired action.

WO 2015/132606 discloses a power tool system which allows the provision of a common battery pack which can be used to provide different voltage levels of power to power tools connected thereto. US2014159642 discloses a method of identifying a type of battery pack of a power tool system when coupled to a battery charger by measuring voltage levels at a plurality of designated terminals of a first battery pack while the battery pack is coupled to the battery charger. EP2562895 provides a system for estimating a heat generation amount for a battery pack for a power tool by determining during a discharge from the battery or during a charge to the battery pack a detected current from a current detection device.

The aim of the present invention is to provide a battery power pack and charger therefore which allows the monitoring of the charging of the power pack to be achieved in an efficient and safe manner. A further aim is to allow the battery pack to be used in conjunction with power tools and in which the same battery pack can be used as a power source for power tools which require power to be provided for operation at different Voltages. A further aim is to provide for the selection of the Voltage level which is supplied to operate the power tool to be made and controlled by the power tool so that there is provided a battery power pack which can be used with different Voltage power tools without the need for the battery pack itself to be adapted or changed.

In a first aspect of the invention there is provided a system as defined in claim 1.

In one embodiment the system includes at least first and second power tools, the first power tool operational with a first Voltage supply level and the second power tool operational with a second Voltage supply level, said battery pack selectively mechanically and electrically connectable with each of the said power tools to provide power thereto, the first power tool includes electrical connection means in a first configuration so as to provide the power received from the battery pack to operate the said first power tool at the said first Voltage supply level and the second power tool includes electrical connection means in a second configuration so as to provide the power received from the battery pack to operate the said second power tool at the said second Voltage supply level such that the same battery pack can be used to supply power for both power tools to operate at respective first and second Voltage supply levels.

In one embodiment the power tool which is connected to the battery pack at an instant of time determines, as a result of the configuration of the electrical connection means therewith, the Voltage supply level which is provided to a motor therein for its operation.

Typically the configuration of the battery pack remains constant regardless of the power tool connected thereto at that instant of time. Typically the configuration of the electrical connection means of a particular power tool in the system remains constant during the use of the power tool.

Typically the rated Voltage of the battery pack is the same throughout and typically the rated Voltage is the smaller of the different Voltages required by the power tools.

In one embodiment the at least two Voltages at which power tools connected to the battery pack can be operated are a first Voltage "n"V and a second Voltage "2n"V. In one embodiment n has a value in the range of 16-22V.

In one embodiment the two Voltages which can be selectively provided are 18V and 36V. In another embodiment the two Voltages could be 20V and 40V. It should be noted that further Voltage levels may also be obtained from the battery pack.

In one embodiment the Voltage supply at the interface between the mechanical and electrical interface between the battery pack and the power tool connected thereto is the same when either of the first or second power tools is connected thereto.

Typically the particular Voltage supply which is generated for operation of the power tool is selected and defined by the particular configuration of the electrical connection means within the power tool and connected to the electrical interface of the tool.

Typically therefore the selection of the particular Voltage level provided for operation of the power tool is selected by and within the power tool at the time of manufacture of the power tool by providing the electrical connection means in a required configuration in order to provide the power at the required Voltage level to that power tool, and no subsequent user intervention, adaption or selection is required during use of the system in order to provide the correct power supply to the power tool other than to connect the required power tool to the battery pack to make mechanical and electrical connection at the interface.

Typically therefore the selection is made by the fixed electrical connection means configuration within the power tool which determines the Voltage supply which is required to operate the particular power tool once the battery pack has been connected thereto.

In one embodiment mechanical safety means, such as a "coded" fitting, can be provided to ensure that an incorrect power pack cannot be fitted to a power tool to provide power thereto.

In one embodiment the cells provided within the battery pack remain in the same format regardless of which Voltage is provided and no access to the interior of the housing or to the power cells is required to be made.

In one embodiment a first configuration of the electrical connection means in the power tool utilises power from groups of cells of the battery pack in a series connection and in a second configuration of the electrical connection means for another power tool utilises power from the groups of power cells of the battery pack in parallel connection. Typically when the power cells are provided in the first, series, configuration the higher of the two Voltages is provided to operate that power tool.

In one embodiment the configuration of the cells in the battery pack is selected to be in a predefined charging configuration by electrical connection means provided in the charging device. Typically the battery pack is charged at one of the Voltage level values of the power tools provided to be connected to the battery pack. In one embodiment the battery pack is charged at the higher of the at least two Voltage values.

Typically the electrical connection means in the power tool include a plurality of plugs which are located so as to be received in the terminal sockets in the battery pack which are connected to the groups of power cells.

Typically the particular location of the plugs in the power tool are selected so as to define the particular configuration of the electrical connection means for that power tool and hence the particular Voltage level of the power supplied from the battery pack to the motor of the power tool.

In one embodiment the configuration of wiring connections from the plugs provided in the power tool to the onwards supply means of power to the power tool motor determine the particular Voltage level which is supplied. In addition or alternatively the power tool may be provided with a first plug or terminal socket configuration and a power tool which requires power at a second Voltage level will have a second plug or socket configuration.

In another embodiment there are a greater number of terminal sockets than there are plugs on any of the power tools in the system and the location of the plugs on the power tool with respect to the terminal sockets of the battery pack are used to define at least part of the configuration of the electrical connection means and hence the Voltage level supplied to that power tool.

In one embodiment the configurations of the electrical connections means provided in each of the power tools and the configuration of the cells in the battery pack are determined and fixed at the time of manufacture of the same and retained during subsequent use of the battery pack and power tools without the requirement for user adaptation or intervention.

In one embodiment the system includes a module which is provided to be located intermediate the battery pack and the power tool, said module having a first set of electrical contacts for electrical connection with the power tool and a second set of electrical contacts for electrical connection with the battery pack and mechanical connection means to allow the module to mechanically connect with the power tool and battery pack.

The first and second sets of electrical contacts are electrically connected within the module and allow the module to be used as an adaptor so as to allow, for example a power tool which has mechanical and/or electrical contacts which are incompatible with the battery pack to be fitted with the module via first mechanical and/or electrical contacts at one face of the module which are compatible and then for the module to be fitted to the battery pack via further mechanical and/or electrical contacts which are compatible with the battery pack and thereby allow a previously incompatible power tool to be able to then be part of the system in accordance with the invention.

In one embodiment the electrical connection means which define the Voltage level of the power supply for operation of the power tool are provided within the module and the module therefore acts as an integral part of the power tool when fitted thereto, typically permanently after the first fitting.

In one embodiment the module is provided to allow the power tool or the battery pack to be adapted to a configuration which matches the other of the power tool or battery pack with which the same is to be used and thereby allow the same to be used as part of the system in accordance with the invention.

In one embodiment the module is provided to adapt the power tool and in one embodiment may be provided with mechanical connection means which once fitted to the tool allow the tool and module in combination to operate as an integral tool and with the said electrical connection means to allow the determination of the Voltage level supplied for operation of the power tool. In this embodiment therefore the original power tool which may have non-conforming electrical and mechanical connection means with the battery pack, can be adapted by the location of the module therewith such that the module has the suitable mechanical and electrical arrangement for use with the battery pack and includes electrical connection means to allow the Voltage level of the power supplies for the operation of the power tool to be defined.

In one embodiment said power tool includes at least one working function operated by the provision of electrical power thereto, said power can be provided by the connection of the battery pack to the power tool to allow a plurality of terminals to be connected and wherein the Voltage supplied from the battery pack to the power tool is determined by the configuration of the electrical connection means provided on the power tool.

In one embodiment the electrical connection means are supplied with power as a result of mechanical and electrical interaction between the battery pack and the power tool.

In one embodiment there are provided two groups of power cells so that there are provided two ground terminals and two Voltage terminals.

In one embodiment each of the power tools to be selectively connected to the battery pack include terminals to connect with each of the ground terminals, each of the Voltage terminals and the temperature terminal.

In one embodiment the battery pack charger includes terminals to connect to each of the ground terminals, each of the Voltage terminals, the temperature terminal, the metering control signal terminal and four Voltage measurement terminals of the battery pack.

By providing the battery pack and power tools in the form herein described, so one of at least two Voltages which is most appropriate for the power tool to which the battery pack is connected at that time, can be provided by the battery pack to the power tool. This therefore means that the control means required to control the operation of the battery pack is significantly reduced as the demands for power or draw of a particular power tool can more efficiently and safely be provided by the provision of the appropriate Voltage supply and hence the demands on control of the current provided are reduced. This, in turn, means that the hardware which is conventionally required to be provided in the battery pack as part of the control means can be removed and still allow the battery pack to operate safely and with a reduced cost of manufacture of the same. Thus, the power output from the battery pack can be selectively higher with reduced loss and reduced heat generation.

The provision of the electrical connection means in the power tools to allow the selective provision of one of at least two possible Voltages to that power tool from the same battery pack as used by another power tool requiring a different Voltage, also allows greater power flexibility to be provided from the same common battery pack without adversely affecting the weight or location requirements of the battery pack.

Significantly the current requirement for both operation of the power tool and the charging of the battery pack is reduced as typically the battery pack will be charged with the cells connected in series. As power is current times Voltage, the power provided can be at least maintained but the costs for doing so will be lower as the lower current is required.

It can also allow the range of power tools which can be operated by the attachment to a battery pack to be increased such as, for example, the operation of bench power tools by power supplied by a battery pack in accordance with the invention connected thereto.

Specific embodiments of the invention are now described with reference to the accompanying drawings; wherein
Figure 1 illustrates a range of power tools with which a battery pack in accordance with the invention may be used to provide power;
Figure 2 illustrates a battery pack of a form in which the battery pack of the current invention can be provided;
Figure 3 illustrates the layout of the battery pack cells for use in accordance with one embodiment of the invention;
Figure 4 illustrates schematically the connection interface between the power tool and the battery pack;
Figures 5 and 11 illustrate the connection terminals for a battery pack in accordance with one embodiment of the invention;
Figure 6a illustrates the battery pack and a first power tool interface connection and terminal functions in accordance with one embodiment;
Figure 6b illustrates the battery pack and a second power tool interface connection and terminal functions in accordance with one embodiment;
Figure 7a and 12 illustrates a dual Voltage battery pack charger connection and terminal functions in accordance with one embodiment of the invention;
Figure 7b illustrates the battery pack and charger interface connection and terminal functions in accordance with one embodiment of the invention;
Figures 8a and b illustrate an embodiment for monitoring the cells during charging of the battery pack;
Figure 9 illustrates the battery pack terminal functions with no power tool or battery charger connected thereto;
Figure 10 illustrates a battery pack in accordance with one embodiment of the invention;
Figure 13 illustrates a current monitoring method of the groups of cells of the battery pack in accordance with one embodiment of the invention;
Figure 14 illustrates a temperature monitoring method of the groups of cells of the battery pack in accordance with one embodiment of the invention;
Figures 15a and b illustrate a Voltage monitoring method of the groups of cells of the battery pack in accordance with one embodiment of the invention; and
Figures 16 -18 illustrate an in battery pack cell monitoring method in accordance with one embodiment of the invention.

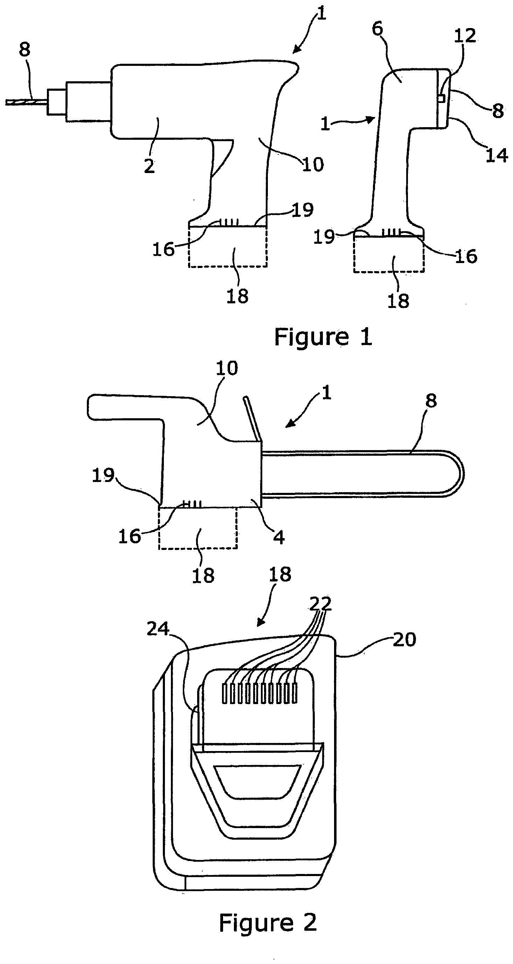

Referring firstly to Figure 1 there is illustrated a range of power tools 1, as examples of the type of power tool with which a portable battery pack with a charger in accordance with the invention can be utilised. The examples given are of low duty Voltage tools such as drill 2 and torch 6 and a high duty Voltage tool such as a chainsaw 4. In each case the power tool has a working portion 8 which is provided with power to operate. In the case of the chainsaw and the drill the same are provided with a motor within the housing 10 which causes the movement of the working portion 8 and in the torchlight a bulb 12 is provided to allow light to be emitted from the face 14 of the torchlight. In each case, the body is provided with electrical connection means, typically in the form of plugs 16, which are positioned so as to be received in matching slots provided in a battery pack 18 which can be mechanically located with the power tool housing, as shown in broken lines at an interface 19 between the power tool and the battery pack. When electrical connection has been made, typically automatically upon the correct mechanical location of the battery pack with the power tool housing at the interface 19, power is supplied from the battery pack to the power tool to allow the same to be used.

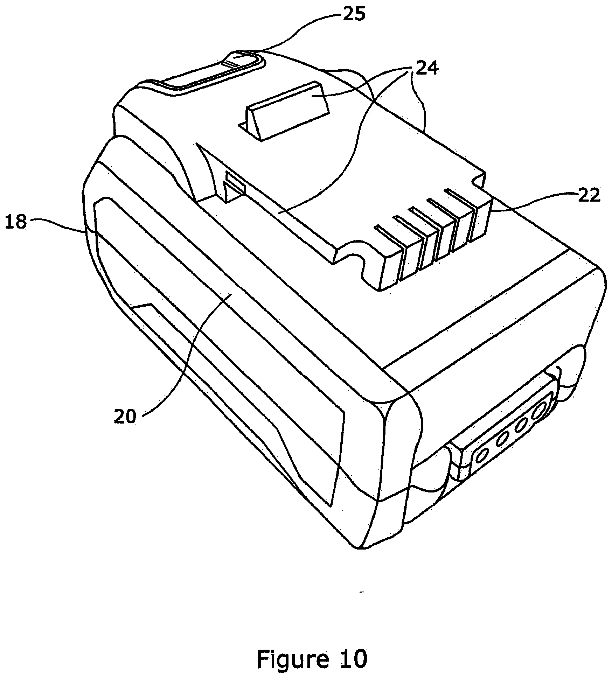

Figures 2 and 10 illustrate in more detail an example of a battery pack 18 in accordance with one embodiment and the same comprises a housing 20 within which a series of batteries or cells are located in a fixed and interconnected position. During use of the battery pack 18 no access is required to be made to the power cells and the periodic charging of the cells can be achieved via connection with a battery charger, most typically using the same electrical terminal slots 22 and mechanical connection means 24 which allow connection with the matching connection means of the power tool. Locking means can be provided to allow the battery pack 18 to be located and locked on the power tool. A release button 25 is provided for user actuation to allow the disengagement of the mechanical connection means.

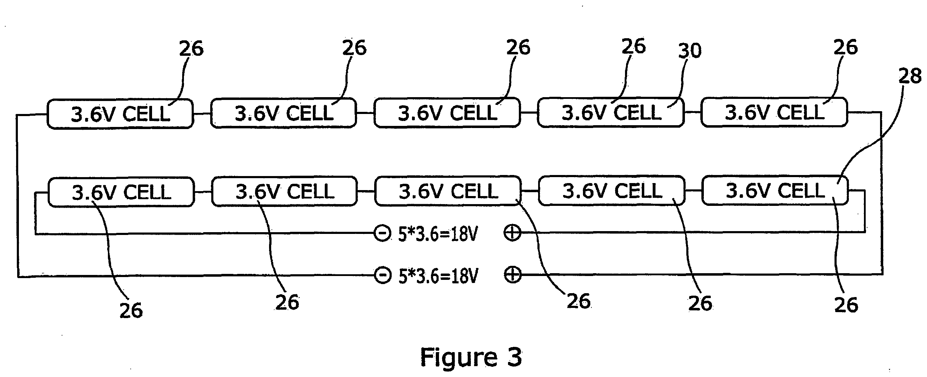

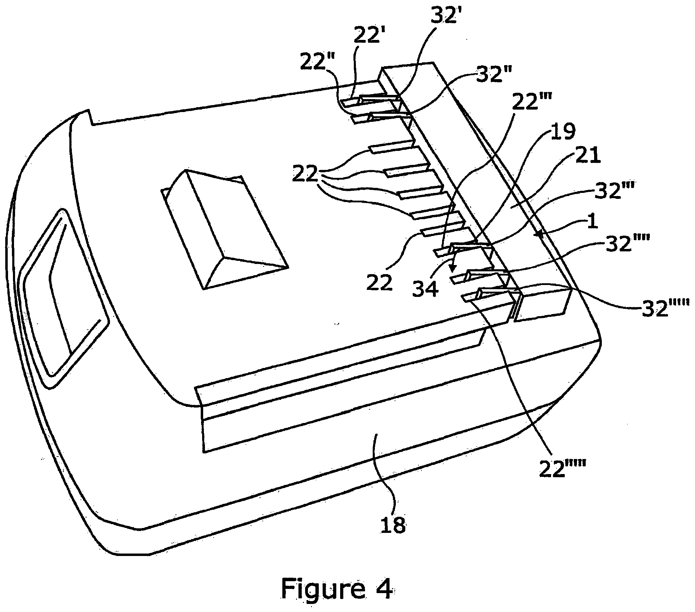

Figure 3 illustrates the layout of a series of batteries or power cells 26 within a battery pack in accordance with the invention and it will be seen that two "banks" or "groups" 28, 30 of the cells are provided. The cells 26 in each group are interconnected in series and are provided with connections which can provide 18V which lead to the connection terminals which are described in more detail with regard to Figures 4a and b. Typically each of the cells are the same.

Power taken from the battery pack is provided when the power tool is connected to the battery pack and the particular Voltage which is utilised by the power tool is dependent upon the electrical connection means provided within the power tool. The electrical connection at the interface 19 between the power tool 1 (illustrated by the box 21) and the battery pack 18 can be achieved such that the control means for the selection of the Voltage provided by the battery pack is provided on the power tool which has a longer life, typically, than the battery pack.

In the embodiment shown in Figure 4 the power tool 1 is provided with terminal plug set 32 which comprise plugs 32'. 32" connected to 0Volts, Ground, terminal sockets 22', 22" for the groups of cells 28,30 respectively, plug 32''' connected to Temperature sensing terminal socket 22''', and plugs 32"" and 32"'" connected in 18Volt terminal sockets 22'''' and 22''''' for the groups of cells 28,30 respectively. The plugs 32 will most typically, in practice be rotated as indicated by arrow 34 to lie parallel with the sockets 22 when the tool 1 and battery pack 18 interface 19 is fully engaged.

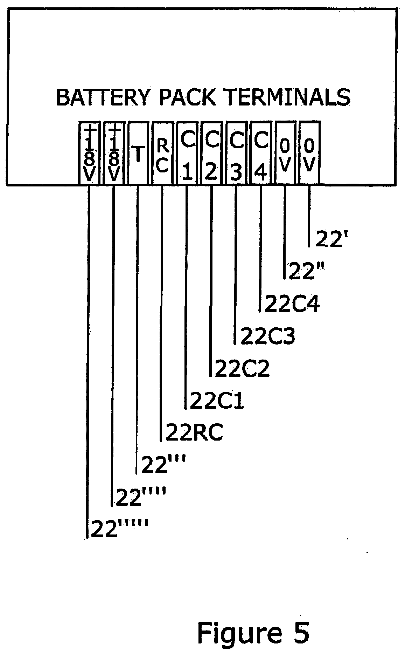

Figure 5 illustrates the terminals, typically in the form of sockets 22, of the battery pack 18 in one embodiment and in more detail. In this case the socket 22' is the ground connection (0Volts) for the power cell group 28 and terminal 22" is the ground connection for the power cell group 30. The terminal 22''' is the temperature sensing terminal which signals the temperature from the inside of the battery pack to the power tool during connection for safety purposes. The terminal 22'''' is the +18Volt terminal connection for the power cell group 28 and the terminal 22''''' is the +18Volt terminal connection for the power cell group 30 in the battery pack.

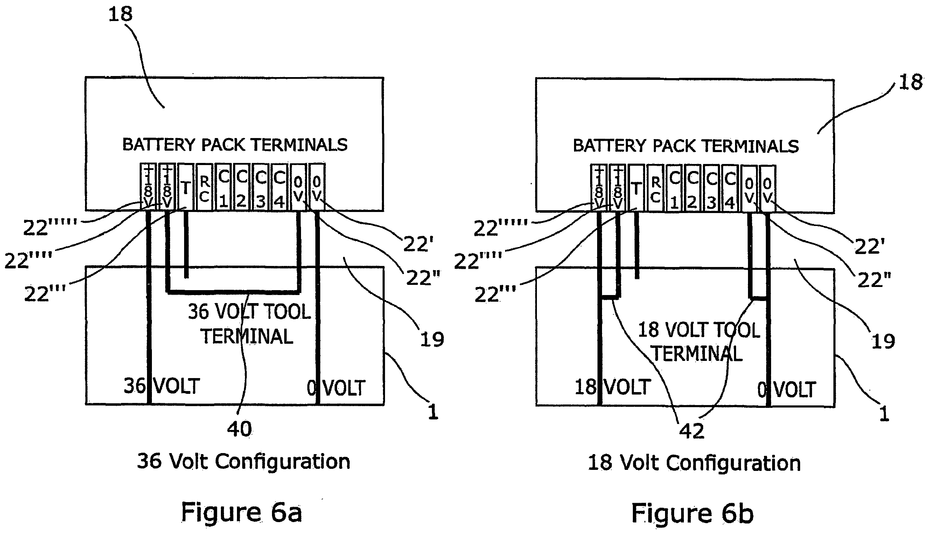

Figures 6a and b illustrate the interface 19 between the power tool 1 and the battery pack 18 and illustrate the terminals 22'-22''''' of the battery pack which are connected to the power tool 1.

Figure 6a illustrates the embodiment in which a power tool 1 which requires a 36 Volt power supply for operation is connected to the battery pack and Figure 6b illustrates the embodiment in which a power tool which requires 18 Volts power supply to operate is connected to the same battery pack 18 as in Figure 6a. The same battery pack terminal sockets 22;'-22''''' are connected to the power tool in both embodiments via terminal plugs 32'-32'''''. However in order for the required Voltage level to be provided for operation of the particular power tool, each power tool includes therein electrical connection means which include the terminals plugs 32'-32''''' and hence allows connection to terminal sockets 22'-22''''' of the battery pack 18. In Figure 6a there is illustrated a first power tool electrical connection means which has connections from the plugs and/or the plugs provided in a first configuration 40 in that power tool and in Figure 6b there is illustrated a second power tool electrical connection means which has connections from the plugs and/or the plugs provided in a second configuration 42 in that power tool which requires power at a different voltage level to the first tool. The electrical connection means configurations can be achieved by wiring in the power tool or via an appropriate circuit board located in the power tool and/ or the selection of which if the plugs are electrically connected to the terminal sockets of the battery pack. The specific electrical connection means configurations for the first and second power tools are illustrated by the lines from the terminal plugs 32', 32" and 32"", 32'''''. In Figure 6a the configuration 40 of the electrical connection means effectively results in the power supplied onwardly to the power tool from the power cells in the battery pack being provided in a series connection of the groups 28,30 of the cells to therefore provide a higher Voltage power level, in this case 36Volts. In the configuration 42 of Figure 6b the power supplied onwardly to that power tool from the groups 28,30 of power cells in the battery pack being provided in parallel which results a lower Voltage supply level, in this case 18Volts. It should be noted that the respective configurations are implemented within the respective power tool, typically at the time of manufacture of the power tools and therefore the interface 19 and battery pack 18, and thereafter the mechanical connection means remain in the same format for both power tool versions and for both Voltage requirements.

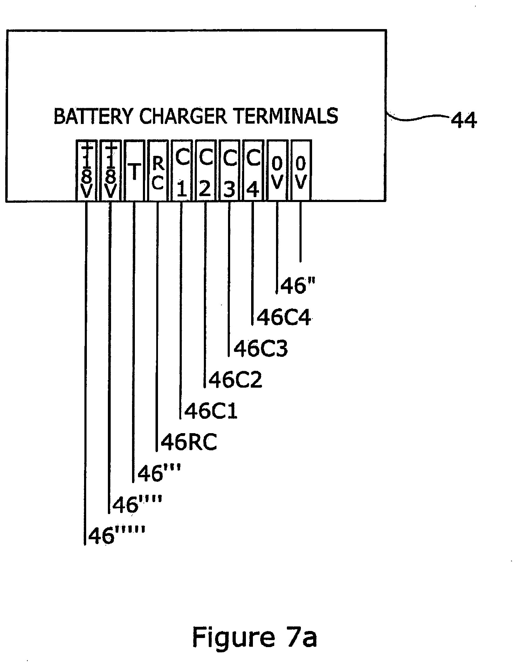

Figure 7a illustrates a battery charger 44 terminal set 46. The terminals 46c1-46c4 are connected when the battery pack is connected to the battery charger and can be used, as will be described subsequently, to measure the voltage between the individual cells of group 28 or group 30 of the power cells in the battery pack. The particular group selected depends on the signal between the charger terminal 46RC and battery pack terminal 22RC and on which basis a decision is made as to in which group 28 or 30 the Voltages between the individual cells are measured.

As with the power tool, the terminal 46' of the charger is connected to the terminal for the ground connection (0Volts) for the power cell group 28 and terminal 46" is connected to the battery pack terminal for the ground connection for the power cell group 30. The terminal 46''' is connected to the terminal 22''' of the battery pack for temperature sensing which signals the temperature from the inside of the battery pack to the charger during connection for safety purposes. The terminal 46'''' is connected via the terminal socket 22'''' to the +18Volt terminal connection for the power cell group 28 and the terminal 46''''' is connected via the terminal socket 22''''' to the +18Volt terminal connection for the power cell group 30 in the battery pack.

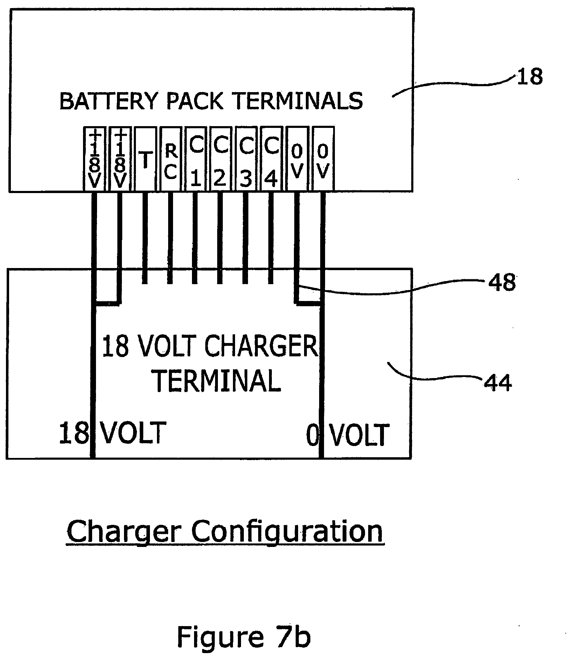

Figure 7b illustrates the battery pack connected to the battery charger 44 and illustrates the manner in which the respective terminals are connected in electrical connection means in a battery charging configuration 48 to allow charging of the battery pack 18 to be achieved safely and efficiently.

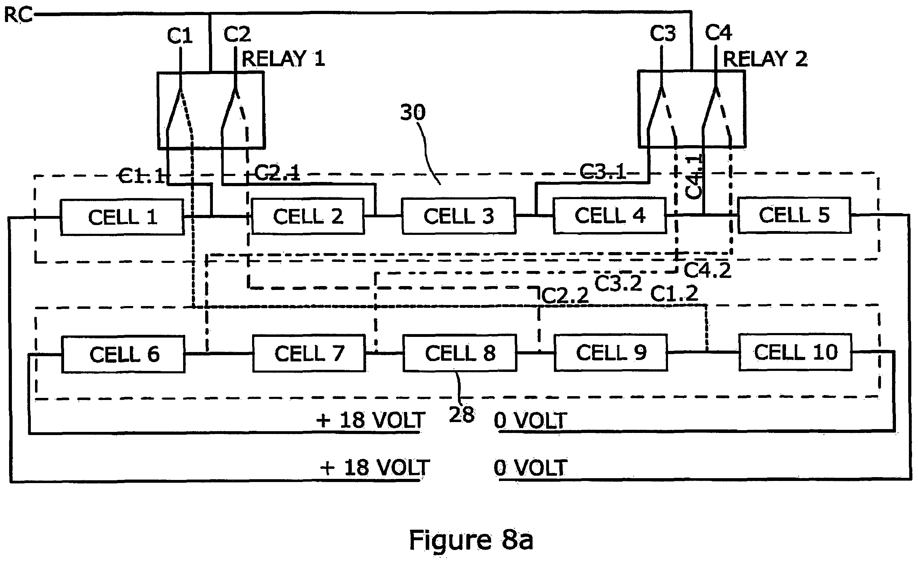

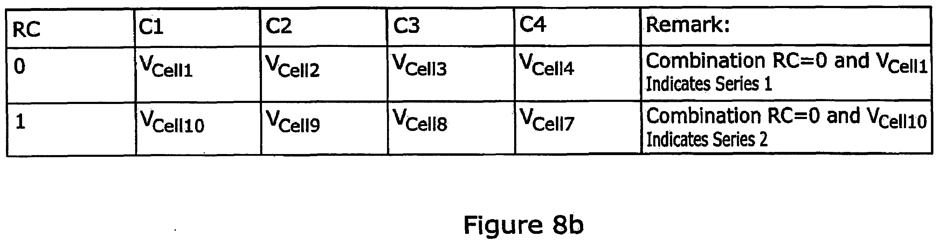

During the charging operation there is a need for the cells 26 in the battery pack to be monitored but conventionally in order to monitor each cell would require eight terminals to be provided which is more costly and can be difficult to accommodate due to size constraints. In accordance with one embodiment of the invention the number of terminals can be reduced to 4 (C1-C4) by the provision of switching in which the charger 44 intermittently measures and monitors the power cells in group 28 or group 30 at any given time rather than the power cells in both groups. This is indicated with reference to Figures 8a and b. Thus in accordance with the invention when the Relay Circuit signal is low (RC off) via terminals 22RC and 46RC, C1 (22C1, 46C1) is indicative that the signals are coming from the group 30 of power cells and when the RC is high (RC on), C1 is indicative that the power cell signals are coming from group 28 of power cells. This means that only a combination of RC and C1 need to be monitored during charging in order to determine whether it is the power cells from Group 28 or Group 30 which are required to be monitored at an instant of time. It should be noted that the relay circuits could be replaced by solid state switching.

Due to the wiring order shown in Figure 8a the power cells c1, c2, c3 and c4 signals receive different Voltages depending on the connected group 28 or 30 which is selected dependent upon the RC signal.

In terms of the connections between the respective cells in the groups the connections c1.1, c2.1, c3.1 and c4.1 are connected in the opposite direction to the connections c1.2, 2.2, 3.2 and 4.2 in order to allow measurement of the Voltage of the cells but also are indicative of which cell is measured in which group. If the current loop of the RC terminal can be detected but there is no current flow then a fault condition is indicated.

This therefore means that only sufficient terminals, four, for the power cells in one of the groups need to be provided at the interface between the charger 44 and the battery pack 18 as only the power cells in one group are monitored at any given time.

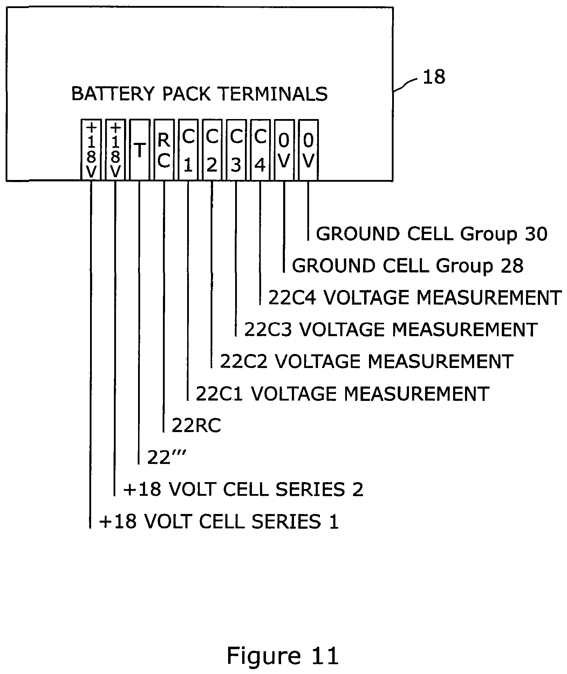

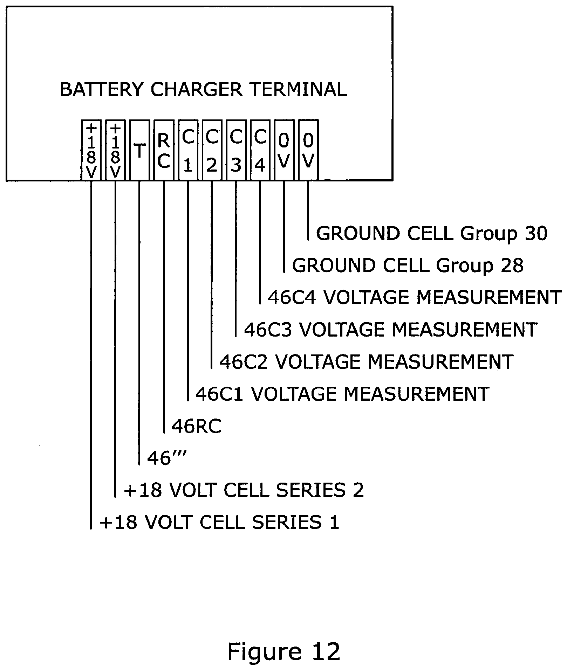

As previously described, the battery groups 28,30 can be connected in series to generate 2 x n Volts and in parallel to generate n Volts
The battery pack terminals 22C1, 22C2, 22C3 and 22C4 shown in Figure 11 are connected when the battery pack is charging, to the charger terminals 46C1, 46C2, 46C3 and 46c4 of the charger 44 shown in Figure 12 and so the measurement of the Voltage between the individual cells of group 28 or group 30 can be performed. The terminal 46'" signals the temperature from the inside of the battery pack 18 to the charger 44.

The decision as to which of the groups of cells 28,30 for which the Voltage is to be measured is dependent upon the signal which is sent from the charger 44 to the 22RC (Relays Control) terminal of the battery pack 18 of which only the terminals are shown in Figure 11 and the battery pack charger terminals are shown in Figure 12.

The terminal 22''' signals the temperature from the inside of the battery pack 18 to the charger 44 or the tool 1, whichever is connected to the battery pack at that time.

In one embodiment the use of relays could be replaced by solid state switching so that a current loop of the 22RC terminal of the battery pack 18 can be detected and, if no current flow is detected then this indicates a fault, such as a faulty connection between the battery pack and the charger. If the 22RC signal is on or off then this allows a decision to be reached with regard to group 28 or group 30 are signalling on the terminals 22c1, 22c2, 22c3 and 22c4.

In practice the 22c1, 22c2, 22c3 and 22c4 signals differ due to the wiring order causing different Voltage levels to be received depending on the connected group 28 or 20 which is decided by the 22RC signal received at that time.

The connections c1.1, c2.1, c3.1 and c4.1 between the respective power cells are connected in the opposite direction as c1.2, 2.2, 3.2 and 4.2 to measure the voltage of the cell but also are indicative of which cell is measured of which group 28,30.

Alternative monitoring methods could be used, such as group or string balance detection using any or any combination of, a shunt method of current monitoring, NTC Method of temperature monitoring and/or Voltage monitoring.

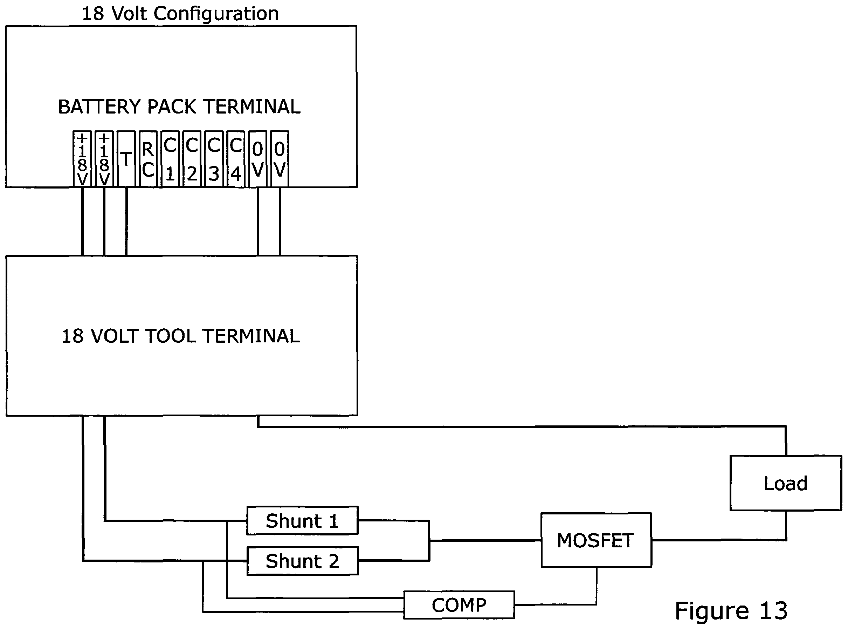

When performing group balance detection this involves the detection of whether the groups 28, 30 of cells are in balance. If a connector of the battery pack is not connected cleanly or has a different contact resistance this will typically result in the two groups being unbalanced which is undesirable but can be detected so that the issue can be prevented. The unbalance will be balanced when the tool is switched off, but when the unbalance is too large the reverse current may exceed the maximum current of the cell. As shown in Figure 13 when the current monitoring method is used the current level per group 28, 30 is measured by the respective shunt1 and shunt2. The comparator COMP then compares the current values from shunt1 and shunt2 and if an unbalance is detected between the two values the signal sent to the tool will cause the control means of the tool to shut down operation of the tool.

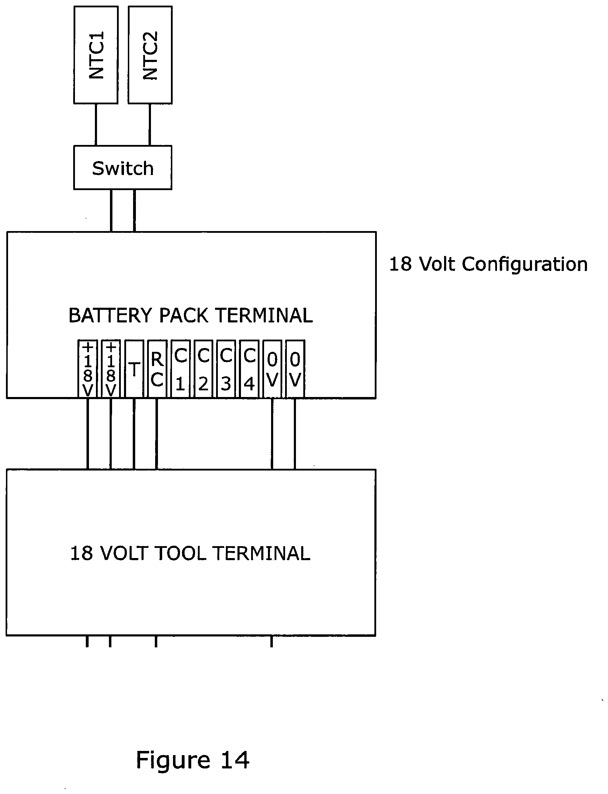

When performing temperature monitoring then, as described in Figure 14 then any difference in the detected temperatures NTC1 and NTC2 of the group of cells 28 and the group of cells 30 respectively is determined and used as an indication for the unbalanced discharge. This can be performed within the tool control means and allows for a more accurate temperature measurement, both during charging, as well as discharging of the battery pack.

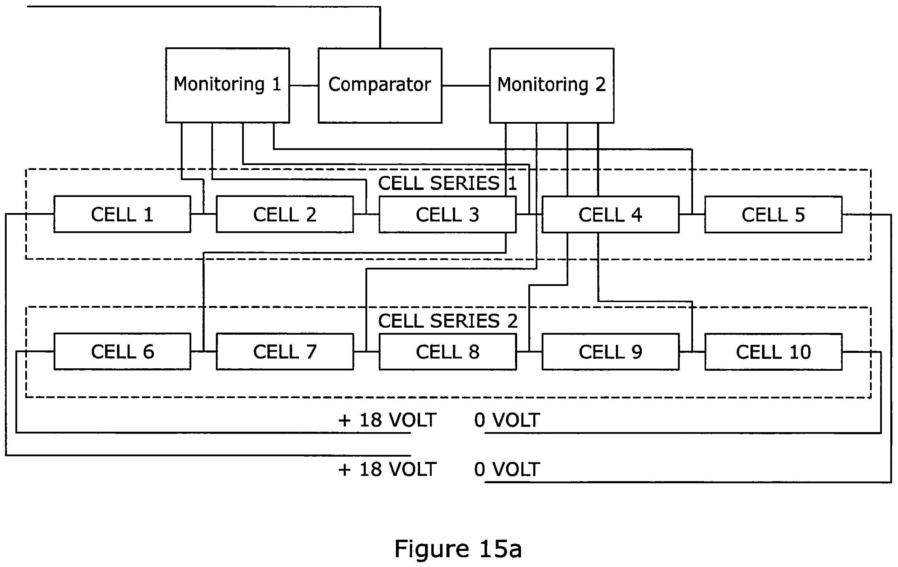

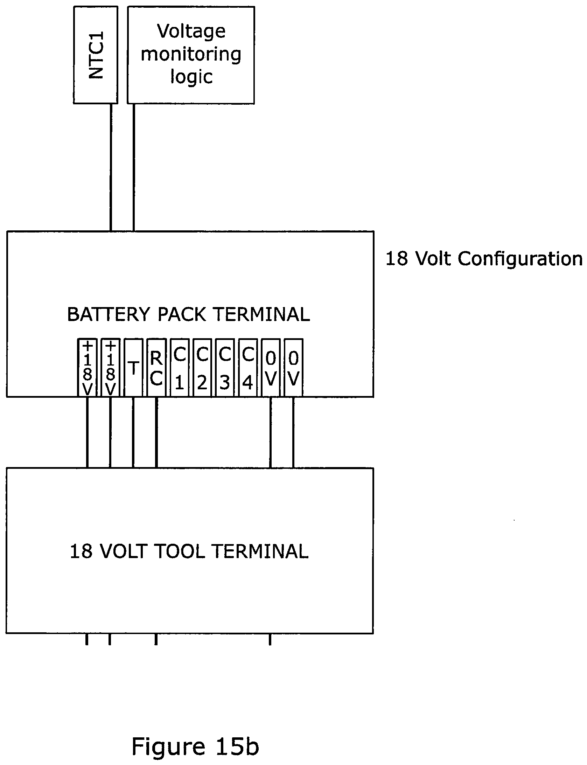

Figures 15a and b illustrate the manner in which Voltage monitoring of the balance of the groups 28,30 is performed and the cell monitoring logic will provide a signal when there is a difference between the Voltage of the two groups 28,30 of cells. When there is a difference in detected Voltage levels a signal will be sent to the control means for the tool which, if the difference is excessive, may cause the operation of the tool to be stopped.

Furthermore for the monitoring of the cells full monitoring and balancing in the charger can be used as described previously or, alternatively the cell monitoring can be performed in the battery pack 18 itself and a combined signal generated therefrom. This method monitors individual cell Voltages inside the battery pack and combines the monitoring signals into one, combined, output signal which indicates the status of the battery pack. For example, status could indicate that there is a single cell in the pack which has prematurely reached it upper or lower Voltage limit. This combined signal is received by the charger 44 or the tool 1, depending which one is connected to the battery pack at that time, and the control means for the charger or tool can then determine whether to alter the operation of the charger or tool accordingly and which may in one embodiment, be to stop charging or discharging until the issue causing the particular status to be generated, is corrected.

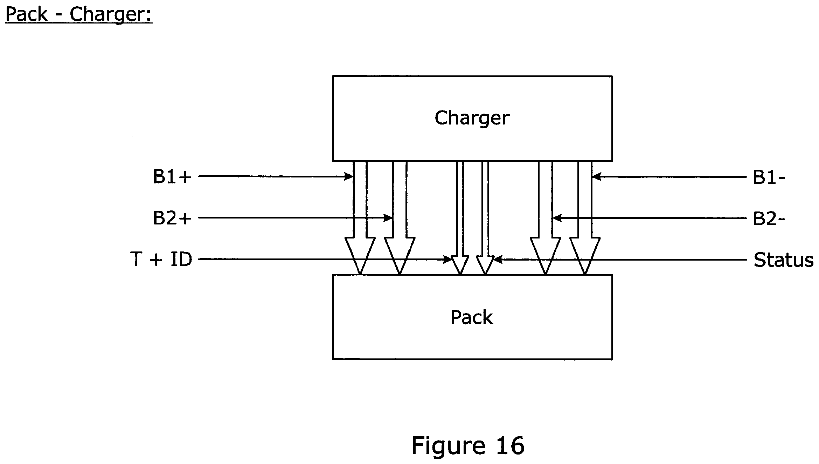

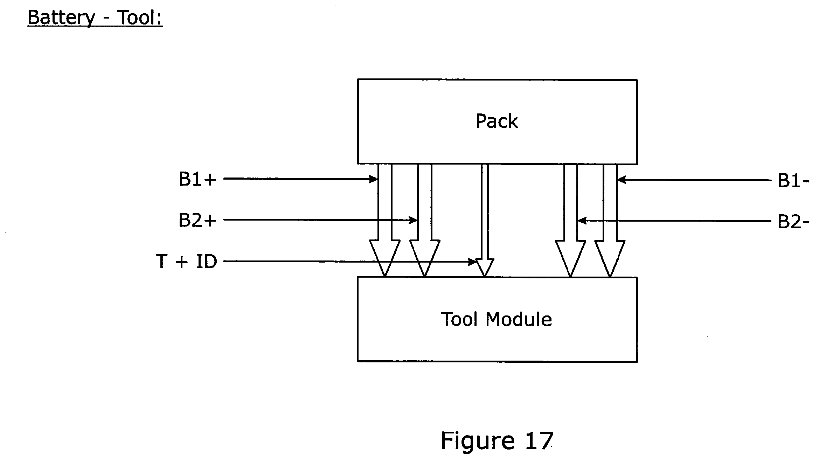

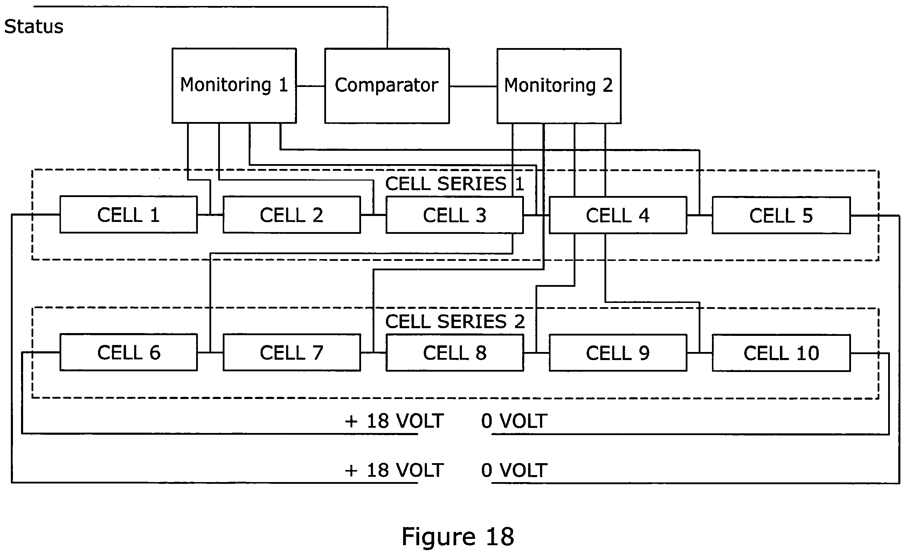

Figure 16 illustrates an arrangement in which the charger 44 is connected to the battery pack 18 and preset values which correspond directly to the maximum charging or discharging current are transmitted between the charger and the battery pack and a status indicator is generated from the battery pack to the charger. Figure 17 illustrates an arrangement in which the tool 1 is connected to the battery pack 18 and preset values which correspond directly to the maximum charging or discharging current are transmitted between the charger and the battery pack and a status indicator is generated from the battery pack to the control means for the tool. Figure 18 illustrates the internal cell arrangement of the battery pack and the monitoring of the cells can be either done by discrete components or standard IC, to then generate the combined status signal from the pack 18 to the tool or charger as appropriate at that time.

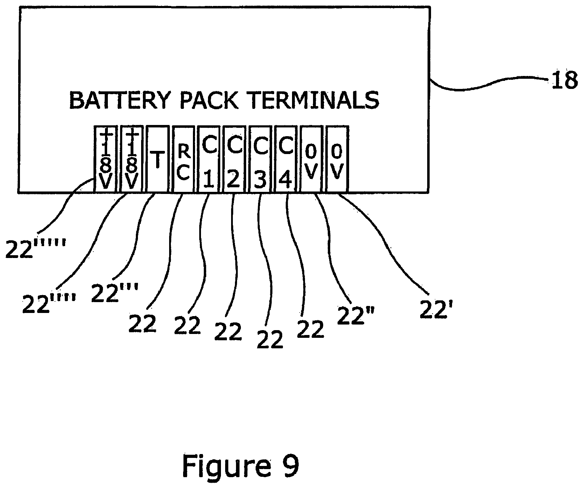

Figure 9 illustrates the battery pack 18 with neither a power tool or charger apparatus connected thereto and in this embodiment the two groups of power cells 28, 30 within the battery pack are not connected and so the pack is configured as a 2 times 1P5S pack which has the advantage that the individual battery groups are not connected such that the battery pack will not exceed the 100Wh limit for safe transit and so can be safely transported prior to use as part of a retail pack without safety concerns or requiring adaptation for transit during its lifetime.

Thus in accordance with the invention the same battery pack 16 can be used with different power tools which require different operating Voltages. For example if the battery pack is configured to provide 20 Volts then when connected to a power tool which is provided with electrical connection means therein to provide the required supply of 20 Volts to operate the motor of the same, the power tool will take 20v power only from the battery pack and the power tool will be operable for a period of time.

However in accordance with the invention when the battery pack, for example as shown in Figure 10, is connected to a power tool which requires a 40 Volt supply to operate the electrical connection means in the power tool are configured such that the required 40Volts is supplied to the power tool motor from the battery pack by combining the 2x 20v supplies of the battery pack into 40Volts. The power tool running at 40Volts can then deliver very high performance, suitable for heavy duty tasks.

Thus unlike prior art 'multi volt' battery systems, it is the internal wiring of the power tool that determines the Voltage which is provided to the motor of that power tool, and the rated power output of the pack does not change. This is in contrast to the conventional systems where the battery pack itself and the power cells therein have to be reconfigured typically by mechanical adaptation assemblies.

## Claims

1. A battery pack (18) and a battery charger (44) system, said battery pack including a housing (10), mechanical location means to allow selective engagement of a power tool (2,4,6) therewith, a plurality of power cells (26) located within the housing (10) and said power cells connected in groups (28,30) to provide electrical power via a set of terminals (22) located so as to be accessible externally of the battery pack (18), the said terminals include a ground terminal (22',22") for each of the groups of power cells (28,30), a Voltage terminal (22"", 22''''') greater than 0 volts for each of the groups of power cells (28,30), a relay control signal terminal (22RC), four voltage measurement terminals (22c1, 22c2, 22c3, 22c4) and a temperature monitoring terminal (22''') **characterised in that** the battery charger (44) is configured to intermittently measure and monitor the power cells (26) in a group (28,30) and to provide a control signal by a relay to allow the monitoring to be switched between said groups of power cells (28,30),), wherein the relay could be replaced by solid state switching.

2. A system according to claim 1 **characterised in that** the system includes at least first and second power tools, the first power tool (2,6) operational with a first Voltage supply level and the second power tool (4) operational with a second Voltage supply level, said battery pack (18) selectively mechanically and electrically connectable with each of the said power tools (2,4,6) to provide power thereto, the first power tool (2,6) includes electrical connection means (16, 32) in a first configuration so as to provide the power received from the battery pack (18) to operate the said first power tool (2,6) at the said first Voltage supply level and the second power tool (4) includes electrical connection means (16, 32) in a second configuration so as to provide the power received from the battery pack (18) to operate the said second power tool (4) at the said second Voltage supply level such that the same battery pack (18) can be used to supply power for both power tools (2,4,6) to operate at respective first and second Voltage supply levels.

3. A system according to claim 2 **characterised in that** the power tool (2,4,6) which is connected to the battery pack (18) determines, as a result of the configuration of the electrical connection means (16,32) therewith, the Voltage supply level which is provided to a motor therein for its operation.

4. A system according to claim 1 **characterised in that** the configuration of the battery pack (18) remains constant.

5. A system according to claim 2 **characterised in that** the battery pack (18) includes control means for the provision of power from the battery pack (18) to the power tool (2,4,6) which is connected to the same at that time.

6. A system according to claim 5 **characterised in that** the rated Voltage of the battery pack (18) is the same regardless of the power tool (2,4,6) connected thereto and the rated Voltage is the smaller of the different Voltage levels ((n)V);(2n)V) required by the power tools (2,4,6) in the system.

7. A system according to claim 2 **characterised in that** the at least two Voltages at which power tools (2,4,6) connected to the battery pack (18) can be operated are a first Voltage (n)V and a second Voltage (2n)V and the selection of the particular one of the said Voltage levels provided for operation of the power tool is selected by the electrical connection means (16,32) of the power tool when connected to the battery pack (18).

8. A system according to claim 2 **characterised in that** a first configuration of the electrical connection means (16,32) utilises power from the groups of power cells (28,30) of the battery pack (18) in a series connection and a second configuration of the electrical connection means (16,32) provides the groups of power cells (28,30) in the battery pack (18) in a parallel connection and, when the battery pack (18) is connected to the charger device (44), the configuration of the power cells in the battery pack is selected to be in a predefined charging configuration.

9. A system according to any of the claims 2-8 **characterised in that** the connection means (16,32) in the power tool (2,4,6) include a plurality of plugs terminals (16,32) which are located so as to be received in socket terminals (22) in the battery pack which are connected to the groups of power cells (28,30) in the battery pack (18).

10. A system according to claim 9 **characterised in that** the particular location of the plugs terminals (16,32) in the power tool (2,4,6) are selected at the time of manufacture along with the configuration of the electrical connection means for that power tool and hence determines the particular Voltage level of the power supplied from the battery pack (18) to the motor of the power tool.

11. A system according to claim 9 **characterised in that** the electrical connection wiring leading from the plugs terminals (16,32) defines the configuration and Voltage level of the supply to the power tool motor.

12. A system according to claim 10 **characterised in that** there are a greater number of terminal sockets (22) than there are plugs (16,32) on any of the power tools (2,4,6) in the system and the location of the plugs (16,32) on the power tool with respect to the terminal sockets (22) of the battery pack (18) are used to define at least part of the configuration of the electrical connection means (16,32) and hence the Voltage level supplied to that power tool (2,4,6).

13. A system according to claim 1 **characterised in that** the configurations of the electrical connections means (16,32) provided in each of the power tools (2,4,6) and the configuration of the power cells in the battery pack (18) are determined and fixed at the time of manufacture of the same and retained during subsequent use of the battery pack (18) without the requirement for user adaptation or intervention.

14. A system according to any of the claims 2-13 **characterised in that** the system includes a module which is provided to be located intermediate the battery pack (18) and the power tool (2,4,6), said module having a first set of electrical contacts for electrical connection with the power tool (2,4,6) and a second set of electrical contacts for electrical connection with the battery pack (18) and mechanical connection means to allow the module to mechanically connect with the power tool and battery pack

## Patentansprüche

1. System mit Batteriepack (18) und Batterieladegerät (44), wobei der genannte Batteriepack Folgendes beinhaltet: ein Gehäuse (10), ein mechanisches Aufnahmemittel, um selektives Ineingriffbringen eines Elektrowerkzeugs (2, 4, 6) damit zuzulassen, mehrere Stromzellen (26), die sich in dem Gehäuse (10) befinden und wobei die genannten Stromzellen zu Gruppen (28, 30) verbunden sind, um elektrische Leistung über einen Satz Anschlüsse (22) bereitzustellen, die positioniert sind, um außerhalb des Batteriepacks (18) zugänglich zu sein, wobei die genannten Anschlüsse einen Erdanschluss (22', 22") für jede der Gruppen von Stromzellen (28, 30), einen Spannungsanschluss (22"", 22""') von mehr als 0 Volt für jede der Gruppen von Stromzellen (28, 30), einen Relaissteuersignalanschluss (22RC), vier Spannungsmessanschlüsse (22c1, 22c2, 22c3, 22c4) und einen Temperaturüberwachungsanschluss (22 ''') beinhalten, **dadurch gekennzeichnet, dass** das Batterieladegerät (44) zum aussetzenden Messen und Überwachen der Stromzellen (26) in einer Gruppe (28, 30) und zum Bereitstellen eines Steuersignals durch ein Relais angeordnet ist, um das Umschalten der Überwachung zwischen den genannten Gruppen von Stromzellen (28, 30) zuzulassen, wobei das Relais durch Festkörperumschaltung ersetzt werden könnte.

2. System nach Anspruch 1, **dadurch gekennzeichnet, dass** das System wenigstens ein erstes und ein zweites Elektrowerkzeug beinhaltet, wobei das erste Elektrowerkzeug (2, 6) mit einem ersten Spannungsversorgungspegel betriebsfähig ist und das zweite Elektrowerkzeug (4) mit einem zweiten Spannungsversorgungspegel betriebsfähig ist, wobei der genannte Batteriepack (18) selektiv mechanisch und elektrisch mit jedem der genannten Elektrowerkzeuge (2, 4, 6) verbindbar ist, um es mit Leistung zu versorgen, wobei das erste Elektrowerkzeug (2, 6) elektrische Verbindungsmittel (16, 32) in einer ersten Anordnung beinhaltet, um die vom Batteriepack (18) her erhaltene Leistung zum Betreiben des genannten ersten Elektrowerkzeugs (2, 6) auf dem genannten ersten Spannungsversorgungspegel bereitzustellen, und das zweite Elektrowerkzeug (4) elektrische Verbindungsmittel (16, 32) in einer zweiten Anordnung beinhaltet, um die vom Batteriepack (18) her erhaltene Leistung zum Betreiben des genannten zweiten Elektrowerkzeugs (4) auf dem genannten zweiten Spannungsversorgungspegel bereitzustellen, so dass derselbe Batteriepack (18) zum Versorgen beider Elektrowerkzeuge (2, 4, 6) mit Leistung zum Betreiben auf dem ersten bzw. zweiten Spannungsversorgungspegel verwendet werden kann.

3. System nach Anspruch 2, **dadurch gekennzeichnet, dass** das Elektrowerkzeug (2, 4, 6), das mit dem Batteriepack (18) verbunden ist, infolge der Anordnung der elektrischen Verbindungsmittel (16, 32) mit ihm den Spannungsversorgungspegel bestimmt, der einem Motor darin für seinen Betrieb bereitgestellt wird.

4. System nach Anspruch 1, **dadurch gekennzeichnet, dass** die Anordnung des Batteriepacks (18) konstant bleibt.

5. System nach Anspruch 2, **dadurch gekennzeichnet, dass** der Batteriepack (18) ein Steuermittel für die Bereitstellung von Leistung vom Batteriepack (18) her zu dem Elektrowerkzeug (2, 4, 6), das zu diesem Zeitpunkt mit demselben verbunden ist, beinhaltet.

6. System nach Anspruch 5, **dadurch gekennzeichnet, dass** die Nennspannung des Batteriepacks (18) ungeachtet des damit verbundenen Elektrowerkzeugs (2, 4, 6) dieselbe ist und die Nennspannung der kleinere der verschiedenen Spannungspegel ((n)V);(2n)V) ist, die von den Elektrowerkzeugen (2, 4, 6) im System benötigt werden.

7. System nach Anspruch 2, **dadurch gekennzeichnet, dass** die wenigstens zwei Spannungen, mit denen mit dem Batteriepack (18) verbundene Elektrowerkzeuge (2, 4, 6) betrieben werden können, eine erste Spannung (n)V und eine zweite Spannung (2n)V sind und die Auswahl des jeweiligen der genannten, für den Betrieb des Elektrowerkzeugs bereitgestellten Spannungspegels durch die elektrischen Verbindungsmittel (16, 32) des Elektrowerkzeugs gewählt wird, wenn es mit dem Batteriepack (18) verbunden wird.

8. System nach Anspruch 2, **dadurch gekennzeichnet, dass** eine erste Anordnung der elektrischen Verbindungsmittel (16, 32) Leistung von den Gruppen von Stromzellen (28, 30) des Batteriepacks (18) in einer Reihenschaltung nutzt und eine zweite Anordnung der elektrischen Verbindungsmittel (16, 32) die Gruppen von Stromzellen (28, 30) in dem Batteriepack (18) in einer Parallelschaltung bereitstellt und, wenn der Batteriepack (18) mit der Ladegerätvorrichtung (44) verbunden ist, die Anordnung der Stromzellen im Batteriepack so ausgewählt ist, dass sie in einer vordefinierten Ladeanordnung ist.

9. System nach einem der Ansprüche 2 bis 8, **dadurch gekennzeichnet, dass** die Verbindungsmittel (16, 32) im Elektrowerkzeug (2, 4, 6) mehrere Anschlussstecker (16, 32) beinhalten, die positioniert sind, um in Anschlussbuchsen (22) in dem Batteriepack aufgenommen zu werden, die mit den Gruppen von Stromzellen (28, 30) in dem Batteriepack (18) verbunden sind.

10. System nach Anspruch 9, **dadurch gekennzeichnet, dass** die jeweilige Position der Anschlussstecker (16, 32) im Elektrowerkzeug (2, 4, 6) zum Zeitpunkt der Herstellung zusammen mit der Anordnung der elektrischen Verbindungsmittel für dieses Elektrowerkzeug ausgewählt wird und daher den jeweiligen Spannungspegel der dem Motor des Elektrowerkzeugs vom Batteriepack (18) zugeführten Leistung bestimmt.

11. System nach Anspruch 9, **dadurch gekennzeichnet, dass** die von den Anschlusssteckern (16, 32) kommende elektrische Verbindungsverdrahtung die Anordnung und den Spannungspegel der Versorgung zum Motor des Elektrowerkzeugs definiert.

12. System nach Anspruch 10, **dadurch gekennzeichnet, dass** es an jedwedem der Elektrowerkzeuge (2, 4, 6) in dem System eine größere Anzahl von Anschlussbuchsen (22) als von -steckern (16, 32) gibt und die Position der Stecker (16, 32) an dem Elektrowerkzeug in Bezug auf die Anschlussbuchsen (22) des Batteriepacks (18) verwendet wird, um die Anordnung der elektrischen Verbindungsmittel (16, 32) und daher den dem Elektrowerkzeug (2, 4, 6) zugeführten Spannungspegel zumindest teilweise zu definieren.

13. System nach Anspruch 1, **dadurch gekennzeichnet, dass** die Anordnung der elektrischen Verbindungsmittel (16, 32), die in jedem der Elektrowerkzeuge (2, 4, 6) bereitgestellt sind, und die Anordnung der Stromzellen im Batteriepack (18) zum Zeitpunkt der Herstellung desselben bestimmt und festgelegt und während der nachfolgenden Verwendung des Batteriepacks (18) beibehalten werden, ohne dass Anpassung oder Eingriff durch den Benutzer erforderlich ist.

14. System nach einem der Ansprüche 2 bis 13, **dadurch gekennzeichnet, dass** das System ein Modul beinhaltet, das bereitgestellt ist, um zwischen dem Batteriepack (18) und dem Elektrowerkzeug (2, 4, 6) positioniert zu sein, wobei das genannte Modul einen ersten Satz elektrischer Kontakte zur elektrischen Verbindung mit dem Elektrowerkzeug (2, 4, 6) und einen zweiten Satz elektrischer Kontakte für die elektrische Verbindung mit dem Batteriepack (18) und mechanische Verbindungsmittel zum Ermöglichen der mechanischen Verbindung des Moduls mit dem Elektrowerkzeug und dem Batteriepack hat.

## Revendications

1. Système de bloc-batterie (18) et de chargeur de batterie (44), ledit bloc-batterie incluant un logement (10), des moyens de localisation mécanique pour permettre une mise en prise sélective d'un outil électrique (2, 4, 6) avec ceux-ci, une pluralité de cellules d'énergie (26) situées au sein du logement (10) et lesdites cellules d'énergie étant connectées en groupes (28, 30) afin de fournir une énergie électrique via un ensemble de bornes (22) situées de sorte à être accessibles à l'extérieur du bloc-batterie (18), lesdites bornes incluant une borne de masse (22', 22") pour chaque cellule des groupes de cellules d'énergie (28, 30), une borne de tension (22"", 22''''') supérieure à 0 volts pour chaque cellule des groupes de cellules d'énergie (28, 30), une borne de signal de commande de relais (22RC), quatre bornes de mesure de tension (22cl, 22c2, 22c3, 22c4) et une borne de surveillance de température (22'''), **caractérisé en ce que** le chargeur de batterie (44) est configuré pour surveiller et mesurer de manière intermittente les cellules d'énergie (26) dans un groupe (28, 30) et pour fournir un signal de commande par un relais afin de permettre à l'opération de surveillance d'être commutée entre lesdits groupes de cellules d'énergie (28, 30), le relais pouvant être remplacé par une commutation à semiconducteur.

2. Système selon la revendication 1 **caractérisé en ce que** le système inclut au moins des premier et deuxième outils électriques, le premier outil électrique (2, 6) étant opérationnel avec un premier niveau d'alimentation en tension et le deuxième outil électrique (4) étant opérationnel avec un deuxième niveau d'alimentation en tension, ledit bloc-batterie (18) étant apte à être connecté mécaniquement et électriquement de manière sélective avec chacun desdits outils électriques (2, 4, 6) afin de fournir de l'énergie à celui-ci, le premier outil électrique (2, 6) inclut des moyens de connexion électrique (16, 32) dans une première configuration de sorte à fournir l'énergie reçue à partir du bloc-batterie (18) afin de faire fonctionner ledit premier outil électrique (2, 6) audit premier niveau d'alimentation en tension et le deuxième outil électrique (4) inclut des moyens de connexion électrique (16, 32) dans une deuxième configuration de sorte à fournir l'énergie reçue à partir du bloc-batterie (18) afin de faire fonctionner ledit deuxième outil électrique (4) audit deuxième niveau d'alimentation en tension de telle sorte que le même bloc-batterie (18) puisse être utilisé pour alimenter en énergie les deux outils électriques (2, 4, 6) afin de les faire fonctionner aux premier et deuxième niveaux d'alimentation en tension respectifs.

3. Système selon la revendication 2 **caractérisé en ce que** l'outil électrique (2, 4, 6) qui est connecté au bloc-batterie (18) détermine, en raison de la configuration des moyens de connexion électrique avec celle-ci, le niveau d'alimentation en tension qui est fourni à un moteur dans celui-ci en vue de son fonctionnement.

4. Système selon la revendication 1 **caractérisé en ce que** la configuration du bloc-batterie (18) reste constante.

5. Système selon la revendication 2 **caractérisé en ce que** le bloc-batterie (18) inclut des moyens de commande pour l'approvisionnement en énergie à partir du bloc-batterie (18) jusqu'à l'outil électrique (2, 4, 6) qui est connecté à celui-ci à ce moment-là.

6. Système selon la revendication 5 **caractérisé en ce que** la tension nominale du bloc-batterie (18) est la même indépendamment de l'outil électrique (2, 4, 6) qui est connecté à celui-ci et la tension nominale est la plus faible des différents niveaux de tension ((n) V) ; (2n) V) requis par les outils électriques (2, 4, 6) dans le système.

7. Système selon la revendication 2 **caractérisé en ce que** lesdites au moins deux tensions auxquelles des outils électriques (2, 4, 6) connectés au bloc-batterie (18) sont aptes à fonctionner sont une première tension (n) V et une deuxième tension (2n) V et la sélection du niveau particulier desdits niveaux de tension prévus pour un fonctionnement de l'outil électrique est sélectionnée par les moyens de connexion électrique (16, 32) de l'outil électrique lorsqu'il est connecté au bloc-batterie (18).

8. Système selon la revendication 2 **caractérisé en ce qu'**une première configuration des moyens de connexion électrique (16, 32) utilise l'énergie provenant des groupes de cellules d'énergie (28, 30) du bloc-batterie (18) dans une connexion en série et une deuxième configuration des moyens de connexion électrique (16, 32) prévoit l'agencement des groupes de cellules d'énergie (28, 30) dans le bloc-batterie (18) dans une connexion en parallèle et, lorsque le bloc-batterie (18) est connecté au dispositif chargeur (44), la configuration des cellules d'énergie dans le bloc-batterie est sélectionnée de façon à être dans une configuration de charge prédéfinie.

9. Système selon n'importe lesquelles des revendications 2-8 **caractérisé en ce que** les moyens de connexion (16, 32) dans l'outil électrique (2, 4, 6) incluent une pluralité de bornes formant fiches (16, 32) qui sont situées de sorte à être reçues dans des bornes formant douilles (22) dans le bloc-batterie qui sont connectées aux groupes de cellules d'énergie (28, 30) dans le bloc-batterie (18).

10. Système selon la revendication 9 **caractérisé en ce que** l'emplacement particulier des bornes formant fiches (16, 32) dans l'outil électrique (2, 4, 6) est sélectionné au moment de la fabrication en conjonction avec la configuration des moyens de connexion électrique pour cet outil électrique et par conséquent détermine le niveau de tension particulier de l'énergie fournie à partir du bloc-batterie (18) jusqu'au moteur de l'outil électrique.

11. Système selon la revendication 9 **caractérisé en ce que** le câblage de connexion électrique partant des bornes formant fiches (16, 32) définit la configuration et le niveau de tension de l'alimentation se rendant au moteur de l'outil électrique.

12. Système selon la revendication 10 **caractérisé en ce qu'**il existe un plus grand nombre de douilles formant bornes (22) qu'il n'y a de fiches (16, 32) sur n'importe lesquels des outils électriques (2, 4, 6) dans le système et l'emplacement des fiches (16, 32) sur l'outil électrique par rapport aux douilles formant bornes (22) du bloc-batterie (18) est utilisé pour définir au moins une partie de la configuration des moyens de connexion électrique (16, 32) et par conséquent le niveau de tension fourni à cet outil électrique (2, 4, 6).

13. Système selon la revendication 1 **caractérisé en ce que** les configurations des moyens de connexion électrique (16, 32) prévus dans chacun des outils électriques (2, 4, 6) et la configuration des cellules d'énergie dans le bloc-batterie (18) sont déterminées et fixées au moment de la fabrication de ceux-ci et retenues durant une utilisation ultérieure du bloc-batterie (18) sans l'exigence pour une intervention ou une adaptation de la part de l'utilisateur.

14. Système selon n'importe lesquelles des revendications 2-13 **caractérisé en ce que** le système inclut un module qui est fourni pour être situé entre le bloc-batterie (18) et l'outil électrique (2, 4, 6), ledit module possédant un premier ensemble de contacts électriques pour une connexion électrique avec l'outil électrique (2, 4, 6) et un deuxième ensemble de contacts électriques pour une connexion électrique avec le bloc-batterie (18) et des moyens de connexion mécanique pour permettre au module de se connecter mécaniquement avec l'outil électrique et le bloc-batterie.
